(19) Europäisches Patentamt
European Patent Office
Office européen des brevets

(11) Veröffentlichungsnummer: **0 000 354**
**A1**

# (12) EUROPÄISCHE PATENTANMELDUNG

(21) Anmeldenummer: **78100273.8**

(51) Int. Cl.$^2$: **C08K5/00**

(22) Anmeldetag: **29.06.78**

(30) Priorität: **07.07.77 CH 8430/77**

(43) Veröffentlichungstag der Anmeldung: **24.01.79**
**Patentblatt 79/2**

(84) Benannte Vertragsstaaten: **BE CH DE FR GB NL SE**

(71) Anmelder: **CIBA-GEIGY AG, Patentabteilung Postfach, CH-4002 Basel (CH)**

(72) Erfinder: **Rasberger, Michael, Dr., Waltersgrabenweg 6, CH-4125 Riehen (CH)**
**Hofmann, Peter, Dr., Lerchenstrasse 57, CH-4059 Basel (CH)**

## (54) Phosphonite enthaltende Gemische und damit stabilisierte Polymeren.

(57) Substituierte 6-Phenoxy-dibenz-[c,e]-[1,2]-oxaphosphorine in Kombination mit phenolischen Antioxidantien eignen sich als Stabilisatoren für Polymere.

EP 0 000 354 A1

CIBA-GEIGY AG, CH-4002 Basel

CIBA—GEIGY

0000354

Case 3-11234/=

Neues Stabilisatorensystem

BEZEICHNUNG GEÄNDERT
siehe Titelseite

Die vorliegendeErfindung betrifft die Verwendung von Stabilisatorsystemen aus Phosphoniten und phenolischen Antioxidantien zum Stabilisieren von Kunststoffen und Elastomeren, die damit stabilisierten Polymeren, sowie das Stabilisatorsystem selbst.

Phosphonite sind als Stabilisatoren bekannt, insbesondere das 6-Phenoxy-dibenz[c,e]-[1,2]-oxaphosphorin und das 6-(2,6-Di-tert.-butyl-4-methyl-phenoxy)-dibenz-[c,e]-[1,2]-oxaphosphorin (Beispiele 9 und 10 der DT-OS 2.034.887). Diese Phosphonite genügen jedoch nicht in jeder Hinsicht den hohen Anforderungen, denen ein Stabilisator genügen soll, insbesondere hinsichtlich Lagerstabilität, Wasseraufnahme, Hydrolyseempfindlichkeit, Verarbeitungsstabilisierung, Farbverbesserung, Flüchtigkeit, Verträglichkeit und Lichtschutzverbesserung.

Es wurde nun gefunden, dass man die Wirkung der Phosphonite beträchtlich und mehr als der Summe der Einzelwirkungen entsprechend steigern kann, wenn man die Phosphonite mit phenolischen Antioxidantien zusammen verwendet.

Demgemäss betrifft die Erfindung ein Stabilisatorsystem bestehend aus einer Kombination eines phenolischen Antioxidans mit einem Phosphonit der Formeln I oder II

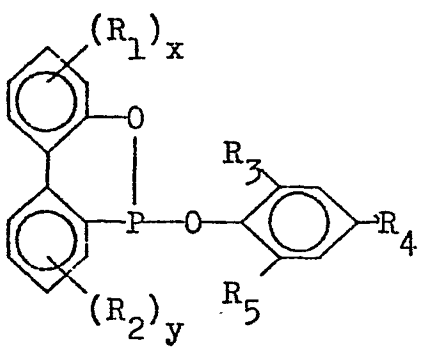

(I)

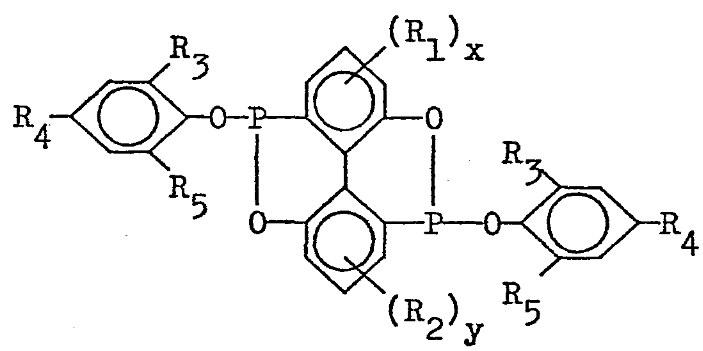

(II) ,

worin

$R_1$ und $R_2$ unabhängig voneinander ein gegebenenfalls substituierter Kohlenwasserstoffrest oder Halogen sind,

x und y unabhängig voneinander 0, 1, 2 oder 3 sind,

$R_3$ und $R_5$ unabhängig voneinander Wasserstoff oder ein gegebenenfalls substituierter Kohlenwasserstoffrest sind, und

$R_4$ Wasserstoff, ein gegebenenfalls substituierter Kohlenwasserstoffrest, $-CO-X-R_6$, $-PO-(OR_8)_2$ oder $-OR_8$ ist, worin

X -O- oder $-NR_7-$ ist,

$R_6$ und $R_7$ unabhängig voneinander Wasserstoff oder ein gegebenenfalls substituierter Kohlenwasserstoffrest sind, und

$R_8$ ein gegebenenfalls substituierter Kohlenwasserstoffrest ist.

$R_1$ und $R_2$ sind als gegebenenfalls substituierter Kohlenwasserstoffrest insbesondere ein solcher mit 1-8 C-Atomen, wie geradkettiges oder verzweigtes Alkyl mit 1-8 C-Atomen, z.B. Methyl, i-Propyl, tert.-Butyl oder tert.-Octyl, und als Halogen insbesondere Chlor.

$R_3$ und $R_5$ sind als gegebenenfalls substituierter Kohlenwasserstoffrest insbesondere ein solcher mit 1-25 C-Atomen, wie $C_1$-$C_{12}$, vor allem $C_1$-$C_8$ Alkyl, z.B. Methyl, Aethyl, i-Propyl, tert.-Butyl, tert.-Pentyl oder tert.-Octyl, $C_3$-$C_4$ Alkenyl, z.B. Allyl oder Methallyl, $C_3$-$C_4$ Alkinyl, z.B. Propargyl, $C_5$-$C_{12}$ Cycloalkyl, z.B. Cyclohexyl, ($C_1$-$C_8$ Alkyl)-$C_5$-$C_8$ Cycloalkyl, z.B. α-Methylcyclohexyl, $C_7$-$C_{14}$ Aralkyl, z.B. Benzyl, α-Methylbenzyl oder α,α-Dimethylbenzyl, $C_6$-$C_{14}$ Aryl, z.B. Phenyl, $C_7$-$C_{14}$ Alkaryl, wie ($C_1$-$C_8$ Alkyl)-phenyl, z.B. Tolyl. $R_3$ und $R_5$ kann auch substituiertes Alkyl sein, insbesondere mit insgesamt 1-25 C-Atomen, wie -($C_1$-$C_8$)-Alkyl-CO-X-$R_6$, worin X und $R_6$ obige und im folgenden als bevorzugt angegebene Bedeutung haben, wie 1,1-Dimethyl-4-äthoxycarbonyl-butyl, oder Di-($C_1$-$C_8$ Alkyl)-phosphonomethyl, z.B. Diäthylphosphonomethyl, oder $C_1$-$C_{36}$ Aminoalkyl, insbesondere Aminomethyl, wie ($C_1$-$C_{18}$ Alkyl)-aminomethyl oder Di-($C_1$-$C_{18}$ Alkyl)-aminomethyl, z.B. Dimethylaminomethyl oder Di-n-butylaminomethyl, oder ($C_1$-$C_{18}$ Acyloxy)-methyl oder ($C_1$-$C_{18}$ Acylthio)-methyl, wie ($C_1$-$C_{18}$ Alkanoyloxy)-methyl, oder ($C_1$-$C_{18}$ Alkanoylthio)-methyl, N-alkyliertes ($C_1$-$C_{18}$ Carbamoyloxy)-methyl, N-

alkyliertes ($C_1$-$C_{18}$ Carbamoylthio)-methyl oder N-alkyliertes ($C_1$-$C_{18}$ Thiocarbamoylthio)-methyl, z.B. Acetoxymethyl, Propionylthiomethyl, N,N-Di-n-butyl-carbamoyloxy-methyl, N,N-Di-n-butyl-carbamoylthio-methyl, N,N-Di-n-butyl-thiocarbamoylthio-methyl oder N,N-Di-n-octyl-thiocarbamoylthio-methyl. $R_5$ kann zudem auch sein: $C_1$-$C_{18}$ Alkoxycarbonylmethyl, z.B. Methoxycarbonylmethyl oder n-Octadecyloxycarbonylmethyl, oder 2-($C_1$-$C_{18}$ Alkoxycarbonyl)-äthyl, wie 2-(Methoxycarbonyl)-äthyl, oder Cyanomethyl.

$R_4$ hat als gegebenenfalls substitutierter Kohlenwasserstoffrest insbesondere die für $R_3$/$R_5$ allgemein und als bevorzugt angegebene Bedeutung und ist als -CO-X-$R_6$ insbesondere ($C_1$-$C_{18}$ Alkoxy)-carbonyl, z.B. Methoxycarbonyl oder n-Octadecyloxycarbonyl, ($C_6$-$C_{14}$ Aryloxy)-carbonyl, wie Phenoxycarbonyl, oder ($C_1$-$C_{18}$ Alkyl)-phenoxycarbonyl, z.B. 2,4-Di-tert.-butyl-phenoxycarbonyl, oder ($C_5$-$C_7$ Cycloalkoxy)-carbonyl, z.B. Cyclohexyloxycarbonyl. $R_4$ ist als -PO-($OR_8$)$_2$ insbesondere solches, worin $R_8$ $C_1$-$C_{18}$ Alkyl ist, wie Diäthylphosphono, Di-n-butylphosphono oder Di-n-octylphosphono.

$R_4$ ist als -$OR_8$ insbesondere $C_1$-$C_{18}$ Alkoxy, z.B. Methoxy.

$R_7$ ist insbesondere Wasserstoff oder $C_1$-$C_{18}$ Alkyl, z.B. Methyl.

Bevorzugt sind Phosphonite der Formel I, worin

$R_1$ $C_1$-$C_8$ Alkyl ist,

x 1 oder 2 ist,

y 0 ist,

$R_3$ und $R_5$ unabhängig voneinander Wasserstoff, gegebenenfalls substituiertes $C_1$-$C_{25}$ Alkyl, $C_3$-$C_4$ Alkenyl, $C_3$-$C_4$ Alkinyl, $C_5$-$C_{12}$ Cycloalkyl, $C_6$-$C_{13}$ α-Methylcycloalkyl, $C_7$-$C_{14}$ Aralkyl, $C_7$-$C_{14}$ Alkaryl oder $C_6$-$C_{14}$ Aryl sind,

$R_4$ eine der für $R_3/R_5$ gegebenen Bedeutungen hat oder ($C_1$-$C_{18}$ Alkoxy)-carbonyl, ($C_5$-$C_7$ Cycloalkoxy)-carbonyl, Phenoxycarbonyl, ($C_1$-$C_{12}$ Alkyl)-phenoxycarbonyl, $C_1$-$C_{18}$ Alkoxy oder 2-($C_1$-$C_{18}$ Alkoxycarbonyl)-äthyl ist.

Besonders bevorzugt sind Phosphonite der Formel I, worin

x und y 0 sind,

$R_3$ und $R_5$ unabhängig voneinander Wasserstoff, $C_1$-$C_{12}$ Alkyl, Cyclohexyl, α-Methylcyclohexyl, Benzyl, α,α-Dimethylbenzyl, Phenyl oder ($C_1$-$C_{18}$ Alkoxy)-carbonyl-$C_1$-$C_8$-alkyl sind, und

$R_4$ eine der für $R_3/R_5$ gegebenen Bedeutungen hat oder ($C_1$-$C_{18}$ Alkoxy)-carbonyl, oder 2-($C_1$-$C_{18}$ Alkoxycarbonyl)-äthyl ist.

Vor allem betrifft die Erfindung Mischungen mit Phosphoniten der Formel I, worin

x und y 0 sind,

$R_3$ und $R_5$ unabhängig voneinander $C_1$-$C_{12}$ Alkyl, Cyclohexyl, α-Methylcyclohexyl, Benzyl, α,α-Dimethylbenzyl oder Phenyl sind, oder eines von $R_3$ und $R_4$ Wasserstoff ist und das andere obige Bebeutung hat, und

$R_4$ Wasserstoff, $C_1$-$C_{12}$ Alkyl, ($C_1$-$C_{18}$ Alkoxy)-carbonyl oder 2-($C_1$-$C_{18}$ Alkoxycarbonyl)-äthyl ist.

Bevorzugt sind insbesondere die folgenden Verbindungen, neben den in den Beispielen genannten Verbindungen:

1. 6-(2,6-Di-äthyl-phenoxy)-dibenz[c,e]-[1,2]oxaphosphorin,

2. 6-(2,4,6-Tri-methyl-phenoxy)-dibenz[c,e]-[1,2]oxaphosphorin,

3. 6-(2-Phenyl-phenoxy)-dibenz[c,e]-[1,2]oxaphosphorin,

4. 6-(2,6-Di-isopropyl-phenoxy)-dibenz[c,e]-[1,2]oxaphosphorin,

5. 6-(2,6-Di-phenyl-4-methoxy-phenoxy)-dibenz[c,e]-[1,2]-oxaphosphorin,

6. 6-(2,6-Di-tert.-butyl-4-n-octadecyloxycarbonyl-phenoxy)-dibenz[c,e]-[1,2]oxaphosphorin,

7. 6-[2,6-Di-tert.-butyl-4-diäthylphosphono-phenoxy)-dibenz[c,e]-[1,2]oxaphosphorin,

8. 6-(2-Methyl-4-di-n-butylaminomethyl-6-tert.-butyl-phenoxy)-dibenz[c,e]-[1,2]oxaphosphorin,

9. 6-[2,6-Di-tert.-butyl-4-(N,N-di-n-octylthiocarbamoylthiomethyl)-phenoxy]-dibenz[c,e]-[1,2]oxaphosphorin,

10. 6-[2,6-(Di-1,1-dimethyl-4-äthoxycarbonyl-butyl)-4-methyl-phenoxy]-dibenz[c,e]-[1,2]oxaphosphorin,

11. 6-(2-Methyl-4-n-octadecyloxycarbonylmethyl-6-tert.-butyl-phenoxy)-dibenz[c,e]-[1,2]oxaphosphorin,

12. 6-[2,6-Di-i-propyl-4-(2-methoxycarbonyl-äthyl)-phenoxy]-dibenz[c,e]-[1,2]oxaphosphorin,

13. 6-[2-Methyl-4-(2,4-di-tert.-butyl-phenoxycarbonyl)-6-tert.-butyl-phenoxy]-dibenz[c,e]-[1,2]oxaphosphorin,

14. 6-(2-Cyclohexyl-4-tert.-octyl-phenoxy)-dibenz[c,e]-[1,2]oxaphosphorin,

15. 6-(2-Methyl-4-diäthylphosphonomethyl-6-α,α-dimethylbenzyl-phenoxy)-dibenz[c,e]-[1,2]oxaphosphorin,

16. 6-(2,4-Di-i-propyl-6-phenyl-phenoxy)-dibenz[c,e]-[1,2]-oxaphosphorin,

17. 2-tert.-Butyl-6-(2,4-di-tert.-butyl-phenoxy)-dibenz-[c,e]-[1,2]oxaphosphorin,

18. 2,4-Di-tert.-butyl-6-(2,4-di-tert.-butyl-phenoxy)-dibenz[c,e]-[1,2]oxaphosphorin,

19. 2,4-Di-tert.-butyl-6-(2,6-di-i-propyl-4-tert.-octyl-phenoxy)-dibenz[c,e]-[1,2]oxaphosphorin,

20. 4-tert.-Butyl-6-(2,4-di-tert.-butyl-6-phenyl-phenoxy)-dibenz[c,e]-[1,2]oxaphosphorin,

21. 2,4-Di-tert.-butyl-6-[2-methyl-4-(2-n-octadecyloxy-carbonyläthyl)-6-tert.-butylphenoxy]-dibenz[c,e]-[1,2]oxa-phosphorin,

22. 2,4-Di-tert.-butyl-6-(2,6-di-tert.-butyl-4-methyl-phen-oxy)-dibenz[c,e]-[1,2]oxaphosphorin,

23. 2,4-Di-tert.-butyl-6-(2,6-di-tert.-butyl-phenoxy)-dibenz[c,e]-[1,2]oxaphosphorin,

24. 6-(2,6-Di-tert.-butyl-4-diäthylphosphonomethyl-phenoxy)-dibenz[c,e]-[1,2]oxaphosphorin,

25. 6-(2,6-Di-tert.-butyl-4-tert.-octyl-phenoxy)-dibenz-[c,e,]-[1,2]oxaphosphorin,

26. 6-(2-tert.-Butyl-4-methyl-6-α-methylcyclohexyl-phenoxy)-dibenz[c,e]-[1,2]oxaphosphorin,

27. 6-[2,6-Di-(α,α-dimethylbenzyl)-4-n-octadecyloxycarbonyl-methyl-phenoxy]-dibenz[c,e]-[1,2]oxaphosphorin,

28. 6-(2-tert.-Butyl-4-methyl-6-tert.-pentyl-phenoxy)-dibenz[c,e]-[1,2]oxaphosphorin,

29. 6-(2-tert.-Butyl-4,6-di-tert.-octyl-phenoxy)-dibenz-[c,e]-[1,2]oxaphosphorin,

30. 6-[2,6-Di-tert.-butyl-4-(2,4-di-tert.-butyl-phenoxycarbonyl)-phenoxy]-dibenz[c,e]-[1,2]oxaphosphorin,

31. 6-[2,6-Di-tert.-pentyl-4-(2-äthoxycarbonyl-äthyl)-phenoxy]-dibenz[c,e]-[1,2]oxaphosphorin,

32. 6-[2-tert.-Butyl-4-methyl-6-(1,1-dimethyl-4-äthoxy-carbonyl-butyl)-phenoxy]-dibenz[c,e]-[1,2]oxaphosphorin,

33. 6-(2,6-Di-tert.-butyl-4-cyanomethyl-phenoxy)-dibenz-[c,e]-[1,2]oxaphosphorin.

Als Beispiele für phenolische Verbindungen sind zu nennen:

1. <u>Einfache 2,6-Dialkylphenole,</u> wie z.B. 2,6-Di-tert.-butyl-4-methylphenol, 2,6-Di-tert.-butyl-4-methoxymethylphenol oder 2,6-Di-tert.-butyl-4-methoxy-phenol.

2. <u>Bisphenole,</u> wie z.B. 2,2'-Methylen-bis-(6-tert.-butyl-4-methylphenol), 2,2'-Methylen-bis-(6-tert.-butyl-4-äthylphenol), 2,2'-Methylen-bis-[4-methyl-6-(α-methylcyclohexyl)-phenol], 1,1-Bis-(5-tert.-butyl-4-hydroxy-2-methylphenyl)-butan, 2,2-Bis-(5-tert.-butyl-4-hydroxy-2-methylphenyl)-butan, 2,2-Bis-(3,5-di-tert.-butyl-4-hydroxyphenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan, Aethylenglykol-bis-[3,3-bis-(3'-tert.-butyl-4'-hydroxyphenyl)-butyrat], 1,1-Bis-(3,5-dimethyl-2-hydroxyphenyl)-3-(n-dodecylthio)-butan oder 4,4'-Thio-bis-(6-tert.-butyl-3-methylphenol).

3. Hydroxybenzyl-Aromaten, wie z.B.
1,3,5-Tri-(3,5-di-tert.-butyl-4-hydroxybenzyl)-2,4,6-trimethylbenzol; 2,2-Bis-(3,5-di-tert.-butyl-4-hydroxybenzyl)-malonsäure-dioctadecylester; 1,3,5-Tris-(3,5-di-tert.-butyl-4-hydroxybenzyl)-isocyanurat oder 3,5-Di-tert.-butyl-4-hydroxybenzyl-phosphonsäurediäthylester.

4. Amide der β-(3,5-Di-tert.-butyl-4-hydroxyphenyl)-propionsäure, wie z.B.
1,3,5-Tris-(3,5-di-tert.-butyl-4-hydroxyphenyl-propionyl)-hexahydro-s-triazin, N,N'-Di-(3,5-di-tert.-butyl-4-hydroxyphenyl-propionyl)-hexamethylendiamin.

5. Ester der β-(3,5-Di-tert.-butyl-4-hydroxyphenyl)-propionsäure mit ein- oder mehrwertigen Alkoholen, wie z.B. mit Methanol, Octadecanol, 1,6-Hexandiol, Aethylenglykol, Thiodiäthylenglykol, Neopentylglykol, Pentaerythrit, Tris-hydroxyäthyl-isocyanurat.

6. Spiroverbindungen, wie z.B.
diphenolische Spiro-diacetale oder -diketale, wie z.B. in 3-, 9-Stellung mit phenolischen Resten substituiertes 2,4,8,10-Tetraoxaspiro-[5,5]-undecan, wie z.B. 3,9-Bis-(3,5-di-tert.-butyl-4-hydroxyphenyl)-2,4,8,10-tetraoxaspiro-[5,5]-undecan, 3,9-Bis-[1,1-dimethyl-2-(3,5-di-tert.-butyl-4-hydroxyphenyl)-äthyl]-2,4,8,10-tetraoxaspiro-[5,5]-undecan.

Besonders bevorzugte phenolische Verbindungen sind:

1,3,5-Tri-(3,5-di-tert.-butyl-4-hydroxybenzyl)-2,4,6-trimethylbenzol

Pentaerythrit-tetra-[3-(3,5-di-tert.-butyl-4-hydroxyphenyl)-propionat]

β-(3,5-Di-tert.-butyl-4-hydroxyphenyl)-propionsäure-n-octadecylester

Thiodiäthylenglykol-β-[4-hydroxy-3,5-di-tert.-butyl-phenyl]-propionat

2,6-Di-tert.-butyl-4-methyl-phenol

3,9-Bis-[1,1-dimethyl-2-(3,5-di-tert.-butyl-4-hydroxyphenyl)-äthyl]-2,4,8,10-tetraoxaspiro-[5,5]-undecan.

Die besondere Wirksamkeit des erfindungsgemässen Stabilisatorsystems äussert sich namentlich in einer ausgezeichneten Farbe und Stabilität des damit stabilisierten Polymeren.

Die Verbindungen der Formel I/II können - zusammen mit einer oder mehreren der phenolischen Verbindungen - einzeln oder auch in Kombination untereinander verwendet werden.

Die Phosphonite der Formeln I und II können nach an sich bekannten Methoden hergestellt werden, insbesondere dadurch, dass man das entsprechende P-Cl Phosphonit mit dem entsprechenden Phenol umsetzt, das in 2,4,6-Stellung $R_3$, $R_4$ bzw. $R_5$ trägt.

Die Umsetzung kann in an sich bekannter Weise geschehen, z.B. durch Erhitzen, bevorzugt auf über etwa 150°C,wie 150-240°, z.B. 220°, wobei HCl abgespalten wird, oder aber in Gegenwart von Basen, wie Amine, z.B. Triäthylamin, Pyridin, N,N-Dimethylanilin oder Natriumcarbonat,

bevorzugt in einem inerten Lösungsmittel, wie aprotische Lösungsmittel, z.B. Ligroin, Toluol, Dimethylformamid, Dimethylacetamid, Sulfolan, Methyläthylketon, Acetonitril, Essigester, wobei aber auch Aminbasen im Ueberschuss verwendet werden können und dabei als Lösungsmittel dienen (vgl. auch DT-OS 2.034.887).

Die Ausgangsstoffe sind bekannt oder können, sofern sie neu sind, in Analogie zu bekannten hergestellt werden. P-Cl Phosphonite sind z.B. aus der DT-OS 2.034.887 bekannt, während die Ausgangsphenole seit langem bekannte Verbindungen und vielfach handelsüblich sind.

Mit dem erfindungsgemässen Stabilisatorengemisch können z.B. folgende Kunststoffe und Elastomere stabilisiert werden:

1. Polymere, die sich von einfach ungesättigten Kohlenwasserstoffen ableiten, wie Polyolefine, wie z.B. Polyäthylen, niederer und hoher Dichte, das gegebenenfalls vernetzt sein kann, Polypropylen, Polyisobutylen, Polymethylbuten-1, Polymethylpenten-1.

2. Mischungen der unter 1 genannten Homopolymeren, wie z.B. Gemische von Polypropylen und Polyäthylen, Polypropylen und Polybuten-1, Polypropylen und Polyisobutylen.

3. Copolymere der dem unter 1 genannten Homopolymeren zugrundeliegenden Monomeren, wie Aethylen-Propylen-Copolymere, Propylen-Buten-1-Copolymere, Propylen-Isobutylen-Copolymere, Aethylen-Buten-1-Copolymere, sowie Terpolymere von Aethylen und Propylen mit einem Dien, wie z.B. Hexadien, Di-cyclopentadien oder Aethylidennorbornen.

4. Polystyrol und seine Copolymeren, wie SAN, ABS, IPS, ASA und EP modifizierte Styrolcopolymerisate.

5. Polyamide.

6. Lineare Polyester.

7. Polyurethane.

8. Polycarbonate.

9. Elastomere, wie Polybutadien, SBR, Polyisopren, Polychloropren und Nitrilkautschuk.

10. Thermoplastische Elastomere, wie SBS, SIS und S-EP-S.

11. Polyvinylchlorid etc..

Die erfindungsgemässe Stabilisatormischung wird in einer Konzentration von 0,005 bis 5% bevorzugt 0,01 bis 1% besonders bevorzugt 0,05 bis 0,5%, berechnet auf das zu stabilisierende Material einverbleibt. Das Phosphonit und das phenolische Antioxidans werden im Verhältnis 10:1 bis 1:5, bevorzugt 5:1 bis 1:2, und insbesondere 3:1 bis 1:1 eingearbeitet. Die Einarbeitung kann nach verschiedenen Methoden erfolgen, beispielsweise durch Zugabe vor der Isolierung, Trockenmischen des Polymeren mit mindestens einer der erfindungsgemässen Verbindungen und einem phenolischen Antioxidans und anschliessender Verarbeitung im Kneter, Mischwalzwerk oder Extruder. Die genannten Additive können auch in der Form einer Lösung oder Dispersion auf das Polymere aufgebracht werden, wobei das Lösungsmittel nachträglich verdunstet wird.

Die so stabilisierten Kunststoffe können in verschiedenster Form angewendet werden, z.B. als Folien, Fasern, Bändchen, Profile oder als Bindemittel für Lacke, Klebemittel oder Kitte.

Als Beispiele weiterer Additive, die zusammen mit der erfindungsgemässen Kombination eingesetzt werden können, sind zu nennen:

UV-Absorber und Lichtschutzmittel, wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Co-Stabilisatoren, Nukleierungsmittel oder sonstige Zusätze wie z.B. Weichmacher, Gleitmittel, Emulgatoren, Füllstoffe, Russ, Asbest, Kaolin, Talk, Glasfasern, Pigmente, optische Aufheller, Flammschutzmittel, Antistatica.

Die Erfindung wird mit den nachfolgenden Beispielen näher erläutert.

## Beispiel 1

10 g 6-Chlor-dibenz[c,e]-[1,2]oxaphosphorin (0,0426 Mol), 10 g 2,6-Di-isopropyl-4-tert.-butyl-phenol und 30 ml Triäthylamin werden für 15 Stunden bei einer Innentemperatur von 110°C zur Reaktion gebracht.

Nach beendeter Reaktion nimmt man das Reaktionsgut in 100 ml Toluol auf, filtriert die Lösung, engt das Filtrat unter vermindertem Druck ein und kristallisiert den Rückstand aus Acetonitril um. Das 6-(2,6-Di-isopropyl-4-tert.-butyl-phenoxy)-dibenz[c,e]-[1,2]oxaphosphorin schmilzt bei 128-130°C (Verbindung 1).

In analoger Weise erhält man folgende Verbindungen:

2. 6-(2,6-Di-tert.-butyl-phenoxy)-dibenz[c,e]-[1,2]oxaphosphorin, F. 152°C,

3. 6-(2,6-Di-tert.-butyl-4-isopropyl-phenoxy)-dibenz[c,e]-[1,2]oxaphosphorin, F. 95-96°C,

4. 6-[2,6-Di-tert.-butyl-4-(2-methoxycarbonyl-äthyl)-phenoxy]-dibenz[c,e]-[1,2]oxaphosphorin, F. 100°C,

5. 6-[2,6-Di-tert.-butyl-4-(2-n-octadecyloxycarbonyl-äthyl)-phenoxy]-dibenz[c,e]-[1,2]oxaphosphorin, F. 75°C,

6. 6-(2,4,6-Tri-tert.-butyl-phenoxy)-dibenz[c,e]-[1,2]oxaphosphorin, F. 149°C,

7. 6-(2,4,6-Tri-isopropyl-phenoxy)-dibenz[c,e]-[1,2]oxaphosphorin, F. 112°C,

8. 6-(2,4-Di-tert.-butyl-phenoxy)-dibenz[c,e]-[1,2]oxaphosphorin, F. <50°C,

9. 6-(2,4-Di-tert.-butyl-6-methyl-phenoxy)-dibenz[c,e]-[1,2]oxaphosphorin, F. 110°C,

10. 6-(2-tert.-Butyl-6-methyl-phenoxy)-dibenz[c,e]-[1,2]-oxaphosphorin, F. 98-100°C,

11. 6-(2,4-Di-tert.-octyl-phenoxy)-dibenz[c,e]-[1,2]oxaphorphorin, F. 109°C,

12. 6-(2,6-Di-tert.-butyl-4-methyl-phenoxy)-dibenz[c,e]-[1,2]oxaphosphorin, F. 136°C,

13. 6-(2-tert.-Butyl-4,6-dimethyl-phenoxy)-dibenz[c,e]-[1,2]oxaphosphorin, F. 126°C,

14. 6-(2-tert.-Butylphenoxy)-dibenz[c,e]-[1,2]oxaphosphorin, F. 74°C.

## Beispiel 2

100 Teile Polypropylen-Pulver werden mit den in der untenstehenden Tabelle angegebenen Stabilisator-Kombinationen in den angegebenen Konzentrationen homogen vermischt. Die erhaltenen Gemische werden 5mal hintereinander in einem Einschneckenextruder bei maximal 260°C (Temperatur der Austragszone) und 100 Upm extrudiert und granuliert. Jeweils nach der 1., 3. und 5. Extrusion wird der Schmelzindex des Materials gemessen. (Bedingungen: Belastung 2160 g bei 230°C; der Schmelzindex wird in Gramm pro 10 Minuten angegeben). Der Abbau des Materials äussert sich in einem Anstieg des Schmelzindex.

| Gewichts-Teile Stabilisator | Schmelzindex nach Anzahl Extrusionen | | |
|---|---|---|---|
| | 1 | 3 | 5 |
| Keiner | 14 | 42 | 76 |
| 0,15 Teile Pentaerythrit-tetra-[3-(3,5-ditert.-butyl-4-hydroxyphenyl)-propionat] (Antioxidans A) | 4,8 | 6,5 | 9,0 |
| 0,1 Teile Stabilisator 13 | 2,5 | 3,6 | 5,1 |
| 0,05 Teile Antioxidans A +0,05 Teile Stabilisator 13 | 2,3 | 3,2 | 4,3 |
| 0,05 Teile Antioxidans A +0,1 Teile Stabilisator 13 | 2,2 | 3,0 | 3,8 |

Beispiel 3

100 Teile Polypropylen Pulver (Propathene HF 20 der Firma ICI) werden mit 0,1 Teil Calciumstearat, mit der Verbindung 11 in den in den untenstehenden Tabellen angegebenen Mengen und mit Pentaerythrit—tetrakis-[3-(3,5-ditertiärbutyl-4-hydroxy-phenyl)-propionat) (0,1 Teil in Tabelle A und 0,05 Teilen in Tabelle B) vermischt.

Diese Gemische werden einerseits 5x hintereinander in einem Einschneckenextruder bei maximal 260°C anderseits 3x hintereinander im gleichen Extruder bei 280°C extrudiert, in jedem Fall mit 100 Umdrehungen pro Minute. Jeweils nach der 1. 3. und 5., beziehungsweise nach der 1. und 3. Extrusion wird der Schmelzindex des Polymeren, gemessen, wobei die Belastung 2160 g, die Temperatur 230°C und die Messgrösse g/10 Min. ist. Der Abbau des Polymeren äussert sich in einem Ansteigen des Schmelzindex.

Tabelle A

| Stabilisator | Schmelzindex nach mehreren Extrusionen | | | | |
|---|---|---|---|---|---|
| | bei 260°C | | | bei 280°C | |
| | 1. | 3. | 5. | 1. | 3. |
| keiner | 6,3 | 8,9 | 15,0 | 7,1 | 21,4 |
| mit 0,025 Teilen Verbindung 11 | 3,0 | 3,8 | 5,1 | 3,4 | 5,1 |

Tabelle B

| Stabilisator | Schmelzindex nach mehreren Extrusionen | | | | |
|---|---|---|---|---|---|
| | bei 260°C | | | bei 280°C | |
| | 1. | 3. | 5. | 1. | 3. |
| Keiner | 6,3 | 8,9 | 15,0 | 7,1 | 21,4 |
| 0,05 Teilen Verbindung 2 | | | | 3,7 | 7,5 |
| 0,05 Teilen Verbindung 6 | | | | 4,0 | 11,0 |
| 0,1 Teile Verbindung 8 | 2,4 | 3,0 | 4,1 | | |
| 0,05 Teilen Verbindung 9 | | | | 3,4 | 5,2 |
| 0,025 Teilen Verbindung 11 | 3,6 | 5,3 | 7,9 | 4,7 | 9,8 |
| 0,05 Teilen Verbindung 11 | 2,6 | 3,3 | 4,2 | 3,2 | 4,6 |
| 0,1 Teile Verbindung 11 | 2,9 | 3,2 | 3,5 | 3,3 | 4,4 |
| 0,05 Teilen Verbindung 13 | | | | 5,7 | 14,0 |

## Beispiel 4

Es wurde wie in Beispiel 3 verfahren, wobei ein anderes Polypropylen Pulver verwendet wurde (Shell Carlona HY 61/1090/1324) von Pentaerythrit-tetrakis-[3-(3,5-ditertiär-butyl-4-hydroxy-phenyl)-propionat] wurden 0,07 Teile eingesetzt.

| Stabilisator | Schmelzindex nach mehreren Extrusionen | | | | |
|---|---|---|---|---|---|
| | bei 260°C | | | bei 280°C | |
| | 1. | 3. | 5. | 1. | 3. |
| Keiner | 5,0 | 7,8 | 11,3 | 7,4 | 17,4 |
| mit 0,025 Teilen Verbindung 11 | 2,3 | 3,4 | 5,2 | 3,0 | 5,5 |
| mit 0,05 Teilen Verbindung 11 | 2,0 | 2,3 | 3,0 | 2,2 | 3,5 |

## Beispiel 5 Polyäthylen

100 Teile hochmolekulares Polyäthylen-Pulver, (Lupolen 52602 der Firma BASF) wurden mit 0,05 Teilen Pentaery - thrit-tetrakis-[3-(3,5-ditertiärbutyl-4-hydroxyphenyl)-propionat] und den in der untenstehenden Tabelle angegebenen erfindungsgemässen Verbindungen gemischt und im Brabender Plastographen der Firma bei 220°C bei 50 Umdrehungen pro Minute geknetet. Während dieser Zeit wird der Knetwiderstand als Drehmoment kontinuierlich registriert. Im Verlauf der Knetzeit beginnt das Polymere nach längerer Konstanz zu vernetzen, was anhand der raschen Zunahme des Drehmoments festgestellt werden kann. Die Wirksamkeit der Stabilisatoren äussert sich in einer Verlängerung der Konstantzeit.

| Stabilisator | Zeit in Minuten bis sich das Drehmoment ändert |
|---|---|
| 0,1 Teil Verbindung 1 | 7 |
| 0,1 Teil Verbindung 2 | 7 |
| 0,1 Teil Verbindung 3 | 11 |
| 0,1 Teil Verbindung 4 | 10 |
| 0,1 Teil Verbindung 5 | 5 |
| 0,1 Teil Verbindung 6 | 8 |
| 0,1 Teil Verbindung 7 | 6 |
| 0,1 Teil Verbindung 8 | 17 |
| 0,1 Teil Verbindung 9 | 13 |
| 0,1 Teil Verbindung 10 | 12,5 |
| 0,1 Teil Verbindung 11 | 12,5 |
| 0,05 Teile Verbindung 11 | 9,0 |
| 0,025 Teile Verbindung 11 | 7,5 |
| 0,1 Teil Verbindung 12 | 9 |
| 0,1 Teil Verbindung 13 | 10 |
| 0,1 Teil Verbindung 14 | 13 |
| keiner | 3 |

Patentansprüche

1. Stabilisatorsystem bestehend aus einer Kombination eines phenolischen Antioxidans mit einem Phosphonit der Formeln I oder II

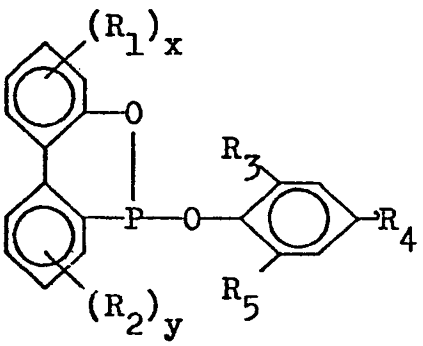

(I)

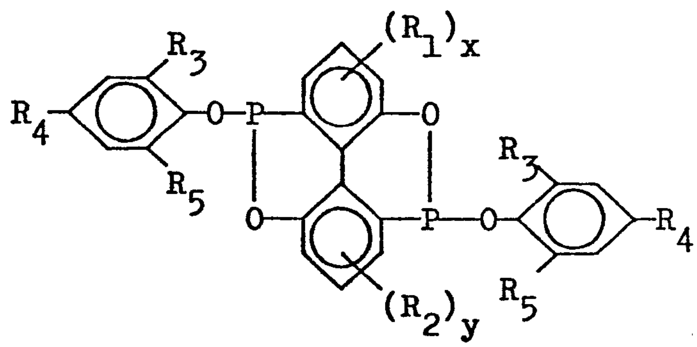

(II) ,

worin

$R_1$ und $R_2$ unabhängig voneinander ein gegebenenfalls substituierter Kohlenwasserstoffrest oder Halogen sind,

x und y unabhängig voneinander 0, 1, 2 oder 3 sind,

$R_3$ und $R_5$ unabhängig voneinander Wasserstoff oder ein gegebenenfalls substituierter Kohlenwasserstoffrest sind, und

$R_4$ Wasserstoff, ein gegebenenfalls substituierter

Kohlenwasserstoffrest, $-CO-X-R_6$, $-PO-(OR_8)_2$ oder $-OR_8$ ist, worin

X -O- oder $-NR_7-$ ist,

$R_6$ und $R_7$ unabhängig voneinander Wasserstoff oder ein gegebenenfalls substituierter Kohlenwasserstoffrest sind, und

$R_8$ ein gegebenenfalls substituierter Kohlenwasserstoffrest ist.

2. Stabilisatorsystem nach Anspruch 1, enthaltend ein Phosphonit der Formel I, worin

$R_1$ $C_1$-$C_8$ Alkyl ist,

x 1 oder 2 ist,

y 0 ist,

$R_3$ und $R_5$ unabhängig voneinander Wasserstoff, gegebenenfalls substituiertes $C_1$-$C_{25}$ Alkyl, $C_3$-$C_4$ Alkenyl, $C_3$-$C_4$ Alkinyl, $C_5$-$C_{12}$ Cycloalkyl, $C_6$-$C_{13}$ α-Methylcycloalkyl, $C_7$-$C_{14}$ Aralkyl, $C_7$-$C_{14}$ Alkaryl oder $C_6$-$C_{14}$ Aryl sind,

$R_4$ eine der für $R_3/R_5$ gegebenen Bedeutungen hat oder ($C_1$-$C_{18}$ Alkoxy)-carbonyl, ($C_5$-$C_7$ Cycloalkoxy)-carbonyl, Phenoxycarbonyl, ($C_1$-$C_{12}$ Alkyl)-phenoxycarbonyl, $C_1$-$C_{18}$ Alkoxy oder 2-($C_1$-$C_{18}$ Alkoxycarbonyl)-äthyl ist.

3. Stabilisatorsystem nach Anspruch 1, enthaltend ein Phosphonit der Formel I, worin

x und y 0 sind,

$R_3$ und $R_5$ unabhängig voneinander Wasserstoff, $C_1$-$C_{12}$ Alkyl, Cyclohexyl, α-Methylcyclohexyl, Benzyl, α,α-Dimethylbenzyl, Phenyl oder ($C_1$-$C_{18}$ Alkoxy)-carbonyl-$C_1$-$C_8$-alkyl sind, und

$R_4$ eine der für $R_3/R_5$ gegebenen Bedeutungen hat oder ($C_1$-$C_{18}$ Alkoxy)-carbonyl, oder 2-($C_1$-$C_{18}$ Alkoxycarbonyl)-äthyl ist.

4. Stabilisatorsystem nach Anspruch 1, enthaltend ein Phosphonit der Formel I, worin

x und y 0 sind,

$R_3$ und $R_5$ unabhängig voneinander $C_1$-$C_{12}$ Alkyl, Cyclohexyl, α-Methylcyclohexyl, Benzyl, α,α-Dimethylbenzyl oder Phenyl sind, oder eines von $R_3$ und $R_4$ Wasserstoff ist und das andere obige Bebeutung hat, und

$R_4$ Wasserstoff, $C_1$-$C_{12}$ Alkyl, ($C_1$-$C_{18}$ Alkoxy)-carbonyl oder 2-($C_1$-$C_{18}$ Alkoxycarbonyl)-äthyl ist.

5. Stabilisatorsystem nach Anspruch 1, enthaltend als Phosphonit 6-(2,6-Di-tert.-butyl-4-methyl-phenoxy)-dibenz[c,e]-[1,2]oxaphosphorin.

6. Stabilisatorsystem nach einem der Ansprüche 1-5, dadurch gekennzeichnet, dass das phenolische Antioxidans ein Ester der β-(3,5-Di-tert.-butyl-4-hydroxyphenyl)-propionsäure ist.

7. Stabilisatorsystem nach einem der Ansprüche 1-5, dadurch gekennzeichnet, dass das phenolische Antioxidans Pentaerythrit-tetra-[3-(3,5-di-tert.-butyl-4-hydroxyphenyl)-propionat ist.

8. Stabilisatorsystem nach einem der Ansprüche 1-5, dadurch gekennzeichnet, dass das phenolische Antioxidans β-(3,5-Di-tert.-butyl-4-hydroxyphenyl)-propionsäure-n-octadecylester ist.

9. Stabilisatorsystem nach einem der Ansprüche 1-5, dadurch gekennzeichnet, dass das phenolische Antioxidans ein Hydroxybenzyl-Aromat ist.

10. Stabilisatorsystem nach einem der Ansprüche 1-5, dadurch gekennzeichnet, dass das phenolische Antioxidans 1,3,5-Tri-(3,5-di-tert.-butyl-4-hydroxybenzyl)-2,4,6-trimethylbenzol ist.

11. Stabilisatorsystem nach einem der Ansprüche 1-5, dadurch gekennzeichnet, dass das phenolische Antioxidans 3,9-Bis-[1,1-dimethyl-2-(3,5-di-tert.-butyl-4-hydroxyphenyl-äthyl]-2,4,8,10-tetraoxaspiro-[5,5]-undecan ist.

12. Stabilisatorsystem nach einem der Ansprüche 1-5, dadurch gekennzeichnet, dass das phenolische Antioxidans 3,9-Bis-[1,1-dimethyl-2-(3,5-di-tert.-butyl-4-hydroxyphenyl-äthyl]-2,4,8,10-tetraoxaspiro-[5,5]-undecan ist.

13. Polymer enthaltend ein Stabilisatorengemisch gemäss Anspruch 1.

14. Polyolefin enthaltend ein Stabilisatorengemisch gemäss Anspruch 1.

15. Polyäthylen enthaltend ein Stabilisatorengemisch gemäss Anspruch 1.

16. Polypropylen enthaltend ein Stabilisatorengemisch gemäss Anspruch 1.

Europäisches Patentamt

# EUROPÄISCHER RECHERCHENBERICHT

0000354

Nummer der Anmeldung
EP 78 10 0273

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | FR - A - 1 301 818 (ETHYL CORPORATION)<br>* Zusammenfassung *<br>-- | 1-16 | C 08 K 5/00 |
| | FR - A - 2 168 352 (M & T)<br>* Ansprüche *<br>-- | 1-16 | |
| | US - A - 3 535 277 (D.E. MILLER)<br>* Spalten 1-2 *<br>-- | 1-16 | RECHERCHIERTE SACHGEBIETE (Int. Cl.²) |
| | US - A - 3 702 878 (TORANOSUKE SAITO)<br>* Spalten 1-2 *<br>---- | 1-16 | C 08 K 5/00<br>C 08 K 5/53 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 28-08-1978 | COQUELIN |